# FASCICULE DE BREVET EUROPEEN

(11) **EP 1 229 801 B1**
(45) Date de publication et mention de la délivrance du brevet: **03.03.2004**
(21) Numéro de dépôt: 00968018.2
(22) Date de dépôt: 12.10.2000
(51) Int. Cl.: A23G 9/28, A23G 9/14, A23G 9/08, A23G 3/20

(54) **PROCEDE DE REALISATION D'UNE CONFISERIE GLACEE COMPOSITE**
VERFAHREN ZUR HERSTELLUNG VON KOMPOSITEISKONFEKT
METHOD FOR PRODUCING A COMPOSITE ICED CONFECTIONERY ITEM

(30) Priorité: 15.10.1999 FR 9912886
(43) Date de publication de la demande: 14.08.2002
(73) Titulaire: Mars Incorporated, McLean, Virginia 22101-3883 (US)
(72) Inventeur: GLADIN, Alain, F-67500 Haguenau (FR); PICQUET, Alain, F-67200 Strasbourg (FR)
(74) Mandataire: Cabinet Hirsch
(86) Numéro de dépôt international: PCT/FR2000/002839
(87) Numéro de publication internationale: WO 2001/028352

(56) Documents cités:
- EP-A- 0 130 748
- WO-A-94/02027
- US-A- 1 404 548
- US-A- 1 465 749
- US-A- 1 711 750
- US-A- 2 850 990
- US-A- 3 072 078
- US-A- 4 229 484
- US-A- 4 388 795
- US-A- 4 517 205
- US-A- 4 666 723
- US-A- 5 911 813
- PATENT ABSTRACTS OF JAPAN vol. 005, no. 120 (C-065), 4 août 1981 (1981-08-04) & JP 56 058459 A (ARAKI MASAMI), 21 mai 1981 (1981-05-21)

## Description

L'invention concerne la fabrication de produits alimentaires glacés, notamment de confiseries sucrées.

US-A-2,850,990, US-A-5,911,813, WO 94/02027 et JP-A-56 058459 concernent la fabrication de produits alimentaires glacés. US-A-1,711,750 et US-A-4,2229, 484 concernent la fabrication de produits alimentaires chocolatés et US-A-4,517,205 concerne la fabrication de produits alimentaires de type bonbon.

On connaît du document EP-0 322 469 un procédé de réalisation d'une confiserie glacée dans lequel on introduit dans un moule froid un premier sorbet liquide, on laisse le sorbet former une croûte dure au contact du moule, puis on aspire le centre liquide. On introduit ensuite au centre un deuxième sorbet, puis on laisse le produit durcir intégralement. Ce procédé nécessite donc de faire passer le produit devant deux stations de dosage et une station d'aspiration. De plus, la chaîne de fabrication est relativement longue.

Un but de l'invention est de fournir un procédé simplifiant la fabrication de tels produits alimentaires notamment en diminuant la longueur de la chaîne de fabrication.

En vue de la réalisation de ce but, on prévoit selon l'invention un procédé de réalisation d'un produit alimentaire glacé, dans lequel on introduit dans un moule deux compositions adaptées à former le produit, au moins l'une des compositions étant une composition externe apte à former une face externe du produit, procédé par lequel on introduit les deux compositions simultanément dans le moule, le débit de la ou chaque composition externe, la température de la ou chaque composition externe avant introduction et la température du moule avant introduction étant tels que chaque fraction de la ou chaque composition externe se fige intégralement dès sa réception dans le moule.

Ainsi, les deux dosages sont effectués au même poste et il n'est plus nécessaire de prévoir un poste d'aspiration pour aspirer le centre liquide du produit. Cette réduction du nombre de postes permet de réduire la longueur de la chaîne de fabrication. De plus, la diminution du nombre de postes facilite le nettoyage de la chaîne.

Par le fait que la fraction de la composition se fige, on entend que cette fraction se solidifie sous l'effet du froid et devient immobile dans le produit. Bien entendu, la solidification de la composition n'implique pas qu'elle soit particulièrement dure, notamment si cette composition est grasse.

En outre, les conditions relatives aux températures permettent d'éviter que l'une des deux compositions surnage par rapport à l'autre, par exemple s'il existe une importante différence de densité entre les compositions, notamment due à des taux de foisonnement différents. En effet, les conditions de température précitées entraînent un accroissement de la viscosité de la ou chaque composition externe et la solidification immédiate de la ou chaque composition externe, à réception dans le moule, de sorte que les deux compositions demeurent sensiblement, dans le moule et donc sur le produit, dans leur configuration d'introduction. Notamment, la composition externe forme convenablement la paroi externe.

Avantageusement, la température de la ou chaque composition externe avant introduction est comprise entre -4°C et 0°C.

Ainsi, dans le cas d'un sorbet formé par une solution aqueuse, le sorbet est dosé à une température proche de son point de congélation en vue de sa solidification immédiate à réception dans le moule.

Avantageusement, la température du moule avant introduction est inférieure à -10°C.

Avantageusement, la ou chaque composition externe est une solution aqueuse.

Avantageusement, l'une des compositions étant une composition interne non destinée à former une face externe du produit, on introduit la composition externe en périphérie de la composition interne.

Avantageusement, la composition interne a, avant introduction, une température telle que la composition interne ne se fige pas intégralement dès sa réception dans le moule.

Ainsi, la composition interne n'est pas trop visqueuse (au contraire de la ou chaque composition externe) et peut remplir convenablement le centre du moule.

Avantageusement, la température de la composition interne avant introduction est comprise entre -5,5°C et - 3,5°C.

Avantageusement, le procédé comprend l'étape d'introduire dans le moule une portion de la composition externe seule.

Ainsi, on pourra former au moins l'une des deux extrémités du produit dans la même composition que la face externe.

Avantageusement, chaque composition est introduite par extrusion.

Avantageusement, le produit alimentaire est sucré.

On prévoit aussi selon l'invention un produit alimentaire glacé, ayant été réalisé au moyen d'un procédé selon l'invention.

On prévoit également selon l'invention un dispositif pour la réalisation d'un produit alimentaire glacé, comprenant un moule et des moyens pour introduire dans le moule deux compositions adaptées à former le produit, au moins l'une des compositions étant une composition externe apte à former une face externe du produit, dans lequel lesdits moyens sont aptes à introduire dans le moule les deux compositions simultanément, le dispositif étant agencé de sorte que le débit introduit de la ou chaque composition externe, la température de la ou chaque composition externe avant introduction et la température du moule avant introduction sont tels que chaque fraction de la ou chaque composition externe se fige intégralement dès sa réception dans le moule.

Avantageusement, les moyens d'introduction comprennent une buse d'extrusion.

Avantageusement, les moyens d'introduction comprennent deux buses d'extrusion coaxiales.

Avantageusement, les moyens d'introduction comprennent au moins un ensemble comportant un piston, un logement de piston apte à recevoir le piston et un conduit de sortie s'étendant en aval du logement par référence à une direction d'écoulement de la composition lors de l'introduction.

Avantageusement, le piston est apte à être déplacé vers l'amont dans le logement de piston afin de provoquer une remontée de la composition dans le conduit de sortie.

Ainsi, on peut achever une phase d'introduction d'une des compositions par le recul du piston, ce qui génère une languette sur le produit. Celle-ci améliore la définition du produit et réduit le risque d'apparitions de gouttes.

D'autres caractéristiques et avantages de l'invention apparaîtront encore dans la description suivante d'un mode préféré de réalisation donné à titre d'exemple non limitatif. Aux dessins annexés :
- les figures 1 à 4 sont des vues en coupe d'un moule montrant quatre étapes d'un mode de mise en oeuvre du procédé ;
- la figure 5 est une vue en coupe axiale d'une buse d'un dispositif selon l'invention pour la mise en oeuvre du procédé des figures 1 à 4.

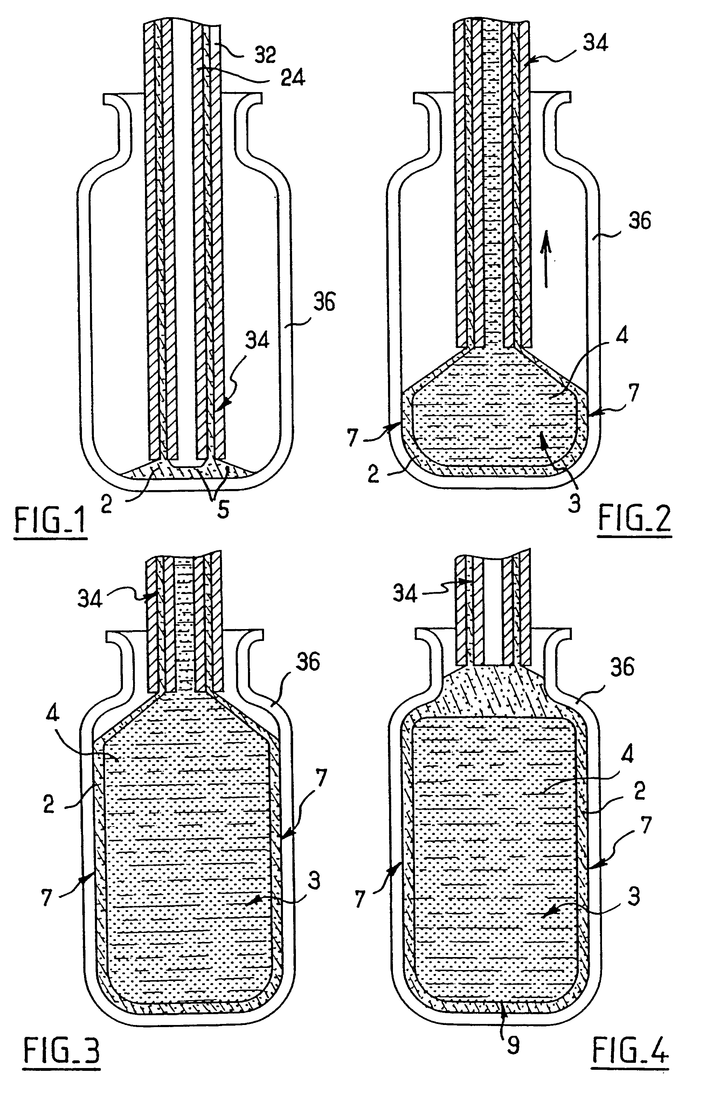

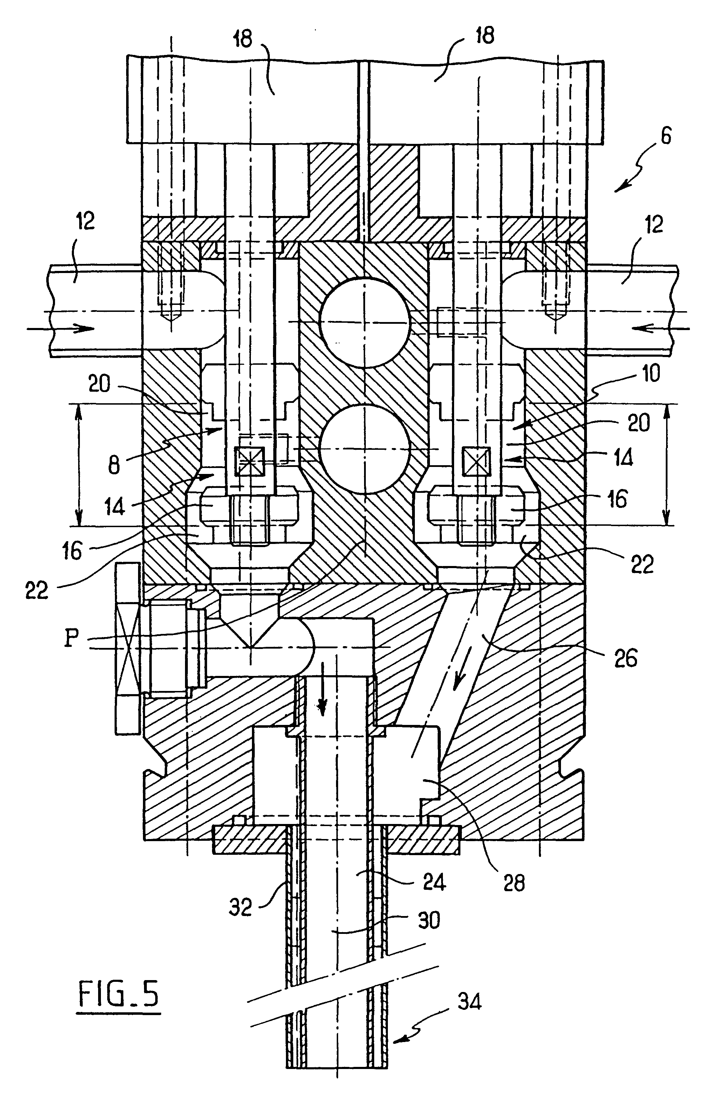

On va d'abord décrire en référence à la figure 5 un dispositif selon l'invention pour la fabrication de confiseries glacées. En l'espèce, la confiserie 3, illustrée dans son moule à la figure 4, est constituée de deux compositions 2, 4 formant chacune un sorbet. Chaque sorbet est ici une solution aqueuse aux fruits et sucrée. A titre d'exemple, chaque composition comporte 20 à 30% en masse de sucre, 15 à 35% en masse de fruits (par exemple sous la forme de jus de fruit ou de pulpe), environ 1% de composés divers (notamment un stabilisant), le reste du sorbet étant formé par de l'eau. La composition 2 est dite externe car elle est destinée à constituer ici une face latérale externe 7 du produit ainsi qu'une face supérieure 9. Elle n'est pas foisonnée. L'autre composition 4 est destinée à former le centre du produit et sera donc appelée interne. Elle est foisonnée, par exemple à 65%.

En référence à la figure 5, le dispositif selon l'invention comporte un distributeur 6 présentant deux circuits d'alimentation 8, 10 pour les compositions respectives. Chaque circuit comporte un conduit d'amenée 12 recevant la composition depuis des moyens de stockage et d'amenée connus en soi. Chaque circuit comporte un logement de valve 14 s'étendant en aval du conduit 12 par référence à une direction d'écoulement de la composition lors de sa sortie du distributeur. Chaque logement 14 est associé à un piston 16 mobile à coulissement dans le logement et actionné à cette fin par un actionneur respectif 18 comportant une tige coaxiale au logement 14 et sur laquelle le piston est monté. Le logement 14 et le piston 16 sont symétriques de révolution. Le logement 14 présente un tronçon amont 20 ayant un diamètre égal à celui du piston de sorte que le piston reçu dans ce tronçon obture le circuit. Le logement 14 présente en outre en aval du tronçon amont un tronçon aval 22 de diamètre beaucoup plus élevé que le diamètre du piston, de sorte que le piston reçu dans le tronçon aval permet l'écoulement de la composition sous l'effet de moyens de pression forçant la composition à s'écouler et situés en amont des conduits 12. Chaque logement 14 forme avec son piston 16 un obturateur ou valve.

Jusqu'à l'extrémité aval du logement 14, les deux circuits 8, 10 sont identiques et symétriques l'un de l'autre par rapport à un plan vertical médian P du distributeur 6.

En aval de cette extrémité aval, le circuit 8 associé à la composition interne 4, à gauche sur la figure 5, forme une chicane en « S » et s'achève par un tube cylindrique 24 plus proche du plan P que la partie amont du circuit. Le tube 24 s'étend verticalement, en saillie vers le bas, hors du corps du distributeur 6. En aval de son extrémité aval, le circuit 10 associé à la composition externe 2, à droite sur la figure 5, comporte un tronçon rectiligne incliné 26 s'étendant en direction du tube 24 et une chambre annulaire 28 dans laquelle ce tronçon 26 débouche latéralement. La chambre annulaire 28 est coaxiale à l'axe 30 du tube 24 qu'elle entoure. La chambre 28 présente une ouverture inférieure annulaire débouchant à l'extrémité supérieure d'un tube cylindrique 32 coaxial au tube 24 et entourant celui-ci à distance de celui-ci. Les tubes 24 et 32 ont des extrémités inférieures respectives libres perpendiculaires à l'axe 30 et situées à un même niveau de cet axe. Les deux tubes 24 et 32 forment une double buse 34 de coextrusion des deux compositions 2, 4.

Ce distributeur 6 permet l'extrusion de l'une quelconque des deux compositions, voire des deux simultanément et coaxialement. Pour l'extrusion d'une composition, le piston 16 associé est placé dans le tronçon aval 22 du logement. Ainsi, la valve est ouverte et la composition s'écoule. Pour interrompre la distribution, le piston 16 déplacé par l'actionneur 18 remonte dans le tronçon amont 20 du logement, en partie inférieure de ce tronçon. Si l'on remonte le piston 16 encore plus en amont, c'est-à-dire en partie amont du logement amont, le piston crée une dépression en aval du piston et emmène avec lui toute la composition s'étendant en aval. Il s'ensuit une remontée de la composition dans la buse 34.

On va maintenant décrire les étapes de la réalisation d'une confiserie glacée 3 selon le présent mode de mise en oeuvre du procédé de l'invention. Le dispositif comporte des moules 36 de forme allongée verticalement et ouverts en partie supérieure. Le moule 36 peut présenter des cavités sur ses faces verticales afin de générer des reliefs correspondants sur le produit fini, par exemple en forme de fruits, de personnages, etc.

En référence à la figure 1, on dispose d'un moule 36 nettoyé et refroidi à une température de -15°C. On insère la buse 34 dans le moule de sorte que l'extrémité inférieure de la buse s'étende à 5 mm du fond du moule. La buse 34 est suffisamment longue pour que le distributeur dans ces conditions ne touche pas le moule.

On déclenche alors l'extrusion de la composition externe 2 qui vient recouvrir le fond inférieur du moule. Le stockage de cette composition en amont du distributeur 6 et son amenée jusqu'à la buse 34 sont effectués à des températures telles que lorsque la composition 2 sort de la buse, elle se trouve à une température comprise entre -4° et 0°C et, en l'espèce, à - 2°C. Cette température est très proche du point de solidification du sorbet 2. Le débit de composition extrudée est tel que, au contact de la paroi du moule à - 15°C, les fractions 5 de la composition ainsi extrudée se solidifient dès leur mise en contact avec la paroi de moule.

En référence à la figure 2 et alors que la buse 34 commence un mouvement de remontée pour sa sortie progressive du moule, on extrude ensuite les deux compositions 2, 4 en même temps. On introduit ainsi la composition interne 4 au centre du moule et coaxialement, entourant celle-ci, la composition externe 2. Les débits des compositions sont choisis en fonction de la vitesse de remontée de la buse de sorte que la composition interne 4 s'écoule au centre du moule et que la composition externe 2 s'écoule sur la composition interne 4 en direction des parois du moule. Dès sa mise en contact avec les parois, la composition externe 2 se solidifie comme précédemment. La composition interne 4 est stockée et amenée jusqu'à la buse de sorte que lors de sa sortie de la buse, sa température soit comprise entre -5,5°C et -3,5°C et, en l'espèce, soit de -4,5°C. Compte tenu du fort foisonnement de cette composition, le sorbet n'est pas très proche de son point de solidification et est faiblement visqueux. Il vient donc remplir convenablement tout le centre de la confiserie au milieu de la composition externe 2. La remontée de la buse et la coextrusion des compositions se poursuit jusqu'au voisinage de la jupe formant l'extrémité supérieure du moule, comme le montre la figure 3.

On interrompt ensuite l'extrusion de la composition interne 4 tout en poursuivant celle de la composition externe 2. Cette interruption est effectuée en remontant le piston 16 jusque dans la partie amont 20 du logement amont 14, ce qui entraîne la remontée de la composition 4 encore présente dans la buse 34 et la formation d'une coupure nette avec génération d'une languette de composition qui s'estompe ensuite. L'extrusion de la composition externe 2 se poursuit jusqu'à ce que celle-ci ait rempli la jupe du moule en référence à la figure 4. On interrompt ensuite cette extrusion avec formation d'une languette comme précédemment. Puis on introduit un bâtonnet dans le produit à travers l'extrémité supérieure du moule.

A ce stade, la composition interne 4 peut n'être pas totalement solidifiée au contraire de la composition externe 2. Le moule 36 avec le produit 3 passe ensuite dans un ou plusieurs tunnels de réfrigération, par exemple à -30°C, pour la solidification intégrale du produit 3. Le produit est ensuite démoulé et le moule nettoyé en vue de la réalisation d'un autre produit.

On obtient ainsi une sucette glacée 3 formée de deux sorbets sur bâtonnet dans laquelle le sorbet externe 2 recouvre complètement et avec une épaisseur constante le sorbet interne 4. En l'espèce, la composition externe 2 forme une couche uniforme pardessus la composition interne 4. Pour chaque sucette, la quantité de composition externe est ici de 41 g et celle de composition interne de 52 g. Leurs débits d'extrusion instantanés respectifs sont d'environ 200 kg/h et 300 kg/h.

Pour obtenir une solidification de la composition externe 2 dès contact avec le moule 36, on devra tenir compte du débit de la composition, de la température du moule et de celle de la composition en sortie de buse.

La qualité du produit ainsi obtenue est très bonne en raison des températures très basses au cours desquelles tout le produit est réalisé. Ces températures permettent notamment d'obtenir une cristallisation très fine en surface du produit.

Bien entendu, on pourra apporter à l'invention de nombreuses modifications sans sortir du cadre de celle-ci.

Le produit pourra comprendre au moins trois compositions, par exemple disposées de façon concentrique. Ou encore, deux des compositions formeront des faces externes du produit de part et d'autre de la composition interne. Le produit pourra comprendre deux compositions seulement formant deux moitiés du produit de part et d'autre d'un plan vertical médian, sous réserve de modifier la buse de façon adaptée.

Au moins l'une des compositions pourra comprendre un produit gras et former une crème glacée.

On pourra mettre en oeuvre la buse indépendamment du procédé selon l'invention. Cette buse permet la remontée du produit extrudé après interruption de l'extrusion, grâce au recul du piston. La buse, pour l'extrusion d'une composition ou la coextrusion de deux compositions, pourra être employée pour la réalisation d'un produit alimentaire ou non, glacé ou non, sucré ou salé. Notamment, elle pourra être employée pour la réalisation d'une confiserie à consommer à température ambiante.

Au moins l'une des compositions (de préférence la composition externe) pourra être une substance grasse, par exemple à base de chocolat. On peut ainsi confectionner un produit glacé comportant une composition centrale à base de crème glacée enrobée d'une couche externe à base de chocolat. Le chocolat pourra être de type noir, lait ou blanc. Il comporte dans tous les cas du beurre de cacao et des matières grasses végétales. Le chocolat blanc, contrairement aux autres, ne contient pas de masse de cacao. Le chocolat noir ne contient pas de matières grasses laitières contrairement aux autres. Le taux de matières grasses pourra varier entre 35 et 50%. Pour une meilleure coextrusion de la composition centrale et du chocolat, on pourra accroître l'isolation thermique entre les deux circuits au niveau de la buse 34, le chocolat devant être extrudé à une température plus élevée que la composition centrale.

## Revendications

1. Procédé de réalisation d'un produit alimentaire glacé (3), dans lequel on introduit dans un moule (36) deux compositions (2, 4) adaptées à former le produit, au moins l'une (2) des compositions étant une composition externe apte à former une face externe (7) du produit, **caractérisé en ce qu'**on introduit les deux compositions (2, 4) simultanément dans le moule, le débit de la ou chaque composition externe (2), la température de la ou chaque composition externe (2) avant introduction et la température du moule (36) avant introduction étant tels que chaque fraction (5) de la ou chaque composition externe (2) se fige intégralement dès sa réception dans le moule.

2. Procédé selon la revendication 1, **caractérisé en ce que** la température de la ou chaque composition externe (2) avant introduction est comprise entre -4°C et 0°C.

3. Procédé selon la revendication 1 ou 2, **caractérisé en ce que** la température du moule (36) avant introduction est inférieure à -10°C.

4. Procédé selon l'une quelconque des revendications 1 à 3, **caractérisé en ce que** la ou chaque composition externe (2) est une solution aqueuse.

5. Procédé selon l'une quelconque des revendications 1 à 4, **caractérisé en ce que** l'une (4) des compositions étant une composition interne non destinée à former une face externe du produit (3), on introduit la composition externe (2) en périphérie de la composition interne (4).

6. Procédé selon la revendication 5, **caractérisé en ce que** la composition interne (4) a, avant introduction, une température telle que la composition interne (4) ne se fige pas intégralement dès sa réception dans le moule (36).

7. Procédé selon l'une quelconque des revendications 5 à 6, **caractérisé en ce que** la température de la composition interne (4) avant introduction est comprise entre -5,5°C et -3,5°C.

8. Procédé selon l'une quelconque des revendications 1 à 7, **caractérisé en ce qu'**il comprend l'étape d'introduire dans le moule (36) une portion de la composition externe (2) seule.

9. Procédé selon l'une quelconque des revendications 1 à 8, **caractérisé en ce que** chaque composition (2, 4) est introduite par extrusion.

10. Procédé selon l'une quelconque des revendications 1 à 9, **caractérisé en ce que** le produit alimentaire (3) est sucré.

11. Produit alimentaire glacé (3), **caractérisé en ce qu'**il a été réalisé au moyen d'un procédé selon l'une quelconque des revendications 1 à 10.

12. Dispositif (6) pour la réalisation d'un produit alimentaire glacé (3) comprenant un moule (36) et des moyens (6) pour introduire dans le moule deux compositions (2, 4) adaptées à former le produit, au moins l'une (2) des compositions étant une composition externe apte à former une face externe (7) du produit (3), **caractérisé en ce que** lesdits moyens (6) sont aptes à introduire dans le moule (36) les deux compositions (2, 4) simultanément, le dispositif étant agencé de sorte que le débit de la ou chaque composition externe (2), la température de la ou chaque composition externe (2) avant introduction et la température du moule (36) avant introduction sont tels que chaque fraction (5) de la ou chaque composition externe (2) se fige intégralement dès sa réception dans le moule.

13. Dispositif selon la revendication 12, **caractérisé en ce que** les moyens d'introduction (6) comprennent une buse d'extrusion (34).

14. Dispositif selon la revendication 12 ou 13, **caractérisé en ce que** les moyens d'introduction (6) comprennent deux buses d'extrusion coaxiales (34).

15. Dispositif selon l'une quelconque des revendications 12 à 14, **caractérisé en ce que** les moyens d'introduction comprennent au moins un ensemble comportant un piston (16), un logement de piston (14) apte à recevoir le piston et un conduit de sortie (26, 28) s'étendant en aval du logement par référence à une direction d'écoulement de la composition lors de l'introduction.

16. Dispositif selon la revendication 15, **caractérisé en ce que** le piston (16) est apte à être déplacé vers l'amont dans le logement de piston (14) afin de provoquer une remontée de la composition (2, 4) dans le conduit de sortie (26, 28).

## Patentansprüche

1. Verfahren zum Herstellen eines gefrorenen Nahrungsmittels (3), bei dem in eine Form (36) zwei Zusammensetzungen (2, 4) eingeleitet werden, die dazu bestimmt sind, das Erzeugnis zu bilden, wobei zumindest eine (2) der Zusammensetzungen eine äußere Zusammensetzung ist, die dazu bestimmt ist, eine Außenseite (7) des Erzeugnisses zu bilden, **dadurch gekennzeichnet, daß** man die beiden Zusammensetzungen (2, 4) gleichzeitig in die Form einleitet, wobei der Durchsatz der oder jeder äußeren Zusammensetzung (2), die Temperatur der oder jeder äußeren Zusammensetzung (2) vor dem Einleiten und die Temperatur der Form (36) vor dem Einleiten so sind, daß jeder Anteil (5) der oder jeder äußeren Zusammensetzung (2) unmittelbar nach einer Aufnahme in der Form insgesamt erstarrt.

2. Verfahren nach Anspruch 1, **dadurch gekennzeichnet, daß** die Temperatur der oder jeder äußeren Zusammensetzung (2) vor dem Einleiten zwischen -4°C und 0°C liegt.

3. Verfahren nach Anspruch 1 oder 2, **dadurch gekennzeichnet, daß** die Temperatur der Form (36) vor dem Einleiten unter -10°C liegt.

4. Verfahren nach einem der Ansprüche 1 bis 3, **dadurch gekennzeichnet, daß** die oder jede äußere Zusammensetzung (2) eine wässrige Lösung ist.

5. Verfahren nach einem der Ansprüche 1 bis 4, **dadurch gekennzeichnet, daß** eine (4) der Zusammensetzungen eine innere Zusammensetzung ist, die nicht dazu bestimmt ist, eine Außenseite des Erzeugnisses (3) zu bilden, wobei man die äußere Zusammensetzung (2) auf einen Umfangsbereich der inneren Zusammensetzung (4) einleitet.

6. Verfahren nach Anspruch 5, **dadurch gekennzeichnet, daß** die innere Zusammensetzung (4) vor dem Einleiten eine solche Temperatur aufweist, daß die innere Zusammensetzung (4) unmittelbar nach ihrer Aufnahme in der Form (36) nicht insgesamt erstarrt.

7. Verfahren nach einem der Ansprüche 5 oder 6, **dadurch gekennzeichnet, daß** die Temperatur der inneren Zusammensetzung (4) vor dem Einleiten zwischen -5,5°C und - 3,5°C liegt.

8. Verfahren nach einem der Ansprüche 1 bis 7, **dadurch gekennzeichnet, daß** das Verfahren den Schritt umfaßt, in die Form (36) einen Teil der äußeren Zusammensetzung (2) allein einzuleiten.

9. Verfahren nach einem der Ansprüche 1 bis 8, **dadurch gekennzeichnet, daß** jede Zusammensetzung (2, 4) durch Extrusion eingeleitet wird.

10. Verfahren nach einem der Ansprüche 1 bis 9, **dadurch gekennzeichnet, daß** das Nahrungsmittelerzeugnis (3) gesüßt ist.

11. Gefrorenes Nahrungsmittelerzeugnis (3), **dadurch gekennzeichnet, daß** es mit Hilfe eines Verfahrens nach einem der Ansprüche 1 bis 10 hergestellt worden ist.

12. Vorrichtung (6) zum Herstellen eines gefrorenen Nahrungsmittelerzeugnisses (3), mit einer Form (36) und Mitteln (6) zum Einleiten von zwei Zusammensetzungen (2, 4) in die Form, die dazu bestimmt sind, das Erzeugnis zu bilden, wobei zumindest eine (2) der Zusammensetzungen eine äußere Zusammensetzung ist, die dazu bestimmt ist, eine Außenseite (7) des Erzeugnisses (3) zu bilden, **dadurch gekennzeichnet, daß** die genannten Mittel (6) dazu bestimmt sind, in die Form (36) die beiden Zusammensetzungen (2, 4) gleichzeitig einzuleiten, wobei die Vorrichtung so ausgebildet ist, daß der Durchsatz der oder jeder äußeren Zusammensetzung (2), die Temperatur der oder jeder äußeren Zusammensetzung (2) vor dem Einleiten und die Temperatur der Form (36) vor dem Einleiten so sind, daß jeder Anteil (5) der oder jeder äußeren Zusammensetzung (2) unmittelbar nach seiner Aufnahme in der Form insgesamt erstarrt.

13. Vorrichtung nach Anspruch 12, **dadurch gekennzeichnet, daß** die Mittel zum Einleiten (6) eine Extrusionsdüse (34) umfassen.

14. Vorrichtung nach Anspruch 12 oder 13, **dadurch gekennzeichnet, daß** die Mittel zum Einleiten (6) zwei koaxiale Extrusionsdüsen (34) umfassen.

15. Verfahren nach einem der Ansprüche 12 bis 14, **dadurch gekennzeichnet, daß** die Mittel zum Einleiten zumindest eine Anordnung umfassen, die einen Kolben (16), eine Aufnahme des Kolbens (14), die dazu bestimmt ist, den Kolben aufzunehmen, und eine Ausgangsleitung (26, 28), die sich unterhalb (stromab) der Aufnahme bezogen auf eine Strömungsrichtung der Zusammensetzung beim Einleiten erstreckt, aufweist.

16. Vorrichtung nach Anspruch 15, **dadurch gekennzeichnet, daß** der Kolben (16) dazu bestimmt ist, nach oberhalb (stromauf) in der Aufnahme des Kolbens (14) verlagert zu werden, um ein Aufsteigen der Zusammensetzung (2, 4) in die Ausgangsleitung (26, 28) hervorzurufen.

## Claims

1. A method for providing an iced food product (3), in which two compositions (2, 4) adapted to form the product are introduced into a mold (36), at least one (2) of the compositions being an outer composition suitable for forming an outer face (7) on the product, **characterised in that** the two compositions (2, 4) are introduced simultaneously into the mold, the temperature of the or each outer composition (2) prior to introduction, and the temperature of the mold (36) prior to introduction being such that each fraction (5) of the or each outer composition (2) becomes integrally solid as soon as it is received in the mold.

2. The method according to claim 1, **characterized in that** the temperature of the or each outer composition (2) prior to introduction is comprised between - 4°C and 0°C.

3. The method according to claim 1 or 2, **characterised in that** the temperature of the mold (36) prior to introduction is less than -10°C.

4. The method according to any one of claims 1-3, **characterised in that** the or each outer composition (2) is an aqueous solution.

5. The method according to any one of claims 1-4, **characterised in that**, with one (4) of the compositions being an inner composition not designed to form an outer face of the product (3), the outer composition (2) is introduced at the periphery of the inner composition (4).

6. The method according to claim 5, **characterised in that** the inner composition (4) has, prior to introduction, a temperature such that the inner composition (4) does not integrally become solid as soon as it is received in the mold (36).

7. The method according to any one of claims 5-6, **characterised in that** the temperature of the inner composition (4) prior to introduction is comprised between -5.5°C and -3.5°C.

8. The method according to any one of claims 1-7, **characterised in that** it comprises the step of introducing into the mold (36) a portion of the outer composition (2) only.

9. The method according to any one of claims 1-8, **characterised in that** each composition (2, 4) is introduced by extrusion.

10. The method according to any one of claims 1-9, **characterised in that** the food product (3) is a sweet food product.

11. An iced food product (3), **characterised in that** it is obtained by a method according to any one of claims 1 to 10.

12. A device (6) for providing an iced food product (3) comprising a mold (36) and means (6) for introducing into said mold two compositions (2, 4) adapted to form said product, at least one (2) of the compositions being an outer composition suitable for forming an outer face (7) of the product (3), **characterised in that** said means (6) are adapted to introduce into said mold (36) said two compositions (2, 4) simultaneously, the device being arranged whereby the throughput of the or each outer composition (2), the temperature of the or each outer composition (2) prior to introduction and the temperature of the mold (36) prior to introduction are such that each fraction (5) of the or each outer composition (2) becomes integrally solid as soon as it is received in the mold.

13. The device according to claim 12, **characterised in that** the introduction means (6) comprise an extrusion nozzle (34).

14. The device according to claim 12 or 13, **characterised in that** the introduction means (6) comprise two coaxial extrusion nozzles (34).

15. The device according to any one of claims 12-14, **characterised in that** the introduction means comprise at least one assembly comprising a piston (16), a piston housing (14) adapted to receive the piston and an outlet conduit (26, 28) extending downstream of said housing with reference to a flow direction of the composition during introduction.

16. The device according to claim 15, **characterised in that** the piston (16) is adapted to be displaced in the upstream direction in the piston housing {14) in order to bring about some return of the composition (2, 4) in said outlet conduit (26, 28).
